# EUROPÄISCHE PATENTSCHRIFT

(11) **EP 0 865 953 B1**
(45) Veröffentlichungstag und Bekanntmachung des Hinweises auf die Patenterteilung: **17.10.2001**
(21) Anmeldenummer: 98103759.1
(22) Anmeldetag: 04.03.1998
(51) Int. Cl.: B60J 10/04, B60J 10/06, B61D 25/00

(54) **Fahrzeugtür mit wahlweiser Einscheiben- oder Doppelscheibenverglasung**
Vehicle doors with optional single- or double glazing
Portes de véhicules avec vitre simple ou double en option

(30) Priorität: 19.03.1997 DE 19711368
(43) Veröffentlichungstag der Anmeldung: 23.09.1998
(73) Patentinhaber: MAN Nutzfahrzeuge Aktiengesellschaft, 80976 München (DE)
(72) Erfinder: Schubert, Klaus, Dr., 82234 Wessling (DE); Rieck, Gerhard, Dipl.-Ing., 81247 München (DE); Kneifel, Eberhard, Dipl.-Ing., 80639 München (DE); Watzek, Gerhard, Dipl.-Ing., 80935 München (DE)

(56) Entgegenhaltungen:
- EP-A- 0 083 696
- DE-A- 4 106 715
- FR-A- 2 681 819
- FR-A- 2 684 051

## Beschreibung

Die Erfindung betrifft eine Fahrzeugtüre nach dem Oberbegriff des Anspruches 1.

Die Anforderungen an höherwertigere Eigenschaften besonders bezogen auf die Wärme- und Schallisolierung bei Nutzfahrzeugen führen zur Doppelverglasung. Da diese Scheiben kostenintensiv, andererseits aber nicht in allen Einsatzfällen und Fahrzeugausführungen erforderlich sind, müssen sowohl Einscheiben- als auch Doppelscheibenverglasungen zur Verfügung stehen.

Eine Verglasung dieser Art, für festverglaste Fenster, ist aus der DE 44 38 266 A1 und der DE 195 19 415 A1 bekannt.

Der Gegenstand nach der DE 195 19 415 A1 ist dabei eine Verbesserung des Gegenstandes nach der DE 44 38 266 A1, so daß nur der Stand der Technik aus der erstgenannten Anmeldung aufgezeigt wird.

Bei dem Anmeldungsgegenstand ist bei der Einscheibenverglasung rundum am Rand der Glasscheiben-Innenseite ein Adapterstück angeklebt, das in eine U-förmige Nut in dem Fenstergummidichtprofil eintaucht und dem Fenster den Halt gibt. Wenn eine Doppelscheibenverglasung gewünscht ist, so taucht die flächig größere Innenscheibe, anstatt des Adapterprofils bei der Einfachverglasung, in die U-förmige Nut ein.

Grundsätzlich wäre diese Scheibenlagerung auch geeignet für bewegliche Verglasungen, wobei dann die U-förmige Nut als Führungsnut ausgebildet sein müßte. Vom Design her gesehen, wäre hier eine bewegliche Einfachverglasung mit mindestens auf der Oberkante bei abgesenktem Fenster sichtbarem Adapterstück oder gekröpftem Fensterrand nicht tragbar.

Die DE 38 14 919 A1 offenbart eine innengeführte Doppelscheibenverglasung eines Personenkraftwagens. Die Adaption von der Verglasung in die Führungsnut erfolgt über Adapterstücke oder eine gekröpfte Außenscheibe oder durch eine überstehende Innenscheibe der Doppelscheibenverglasung.

Eine Alternative über den wahlweisen Einbau einer Einscheiben- oder Doppelscheibenverglasung ist nicht erkennbar. Die genannte DE sei hier stellvertretend für ähnliche innengeführte Doppelscheibenverglasungen genannt.

Der Erfindung liegt die Aufgabe zugrunde, mit möglichst geringem Aufwand wahlweise eine Einscheiben- oder Doppelscheibenverglasung in eine unveränderte Fahrzeugtüre einbaubar zu machen.

Die Aufgabe wird erfindungsgemäß durch die Merkmale des Anspruches 1 und in vorteilhafter Ausgestaltung durch die Merkmale der Unteransprüche gelöst.

Dadurch, daß erfindungsgemäß bei der Doppelscheibenverglasung, durch den ungekröpften Überstand der Außenscheibe gegenüber der Innenscheibe, die Verglasung außengeführt ist, kann bei der Einfachverglasung die Scheibe anstelle der Außenscheibe der Doppelverglasung eingebaut werden. Der Dickenunterschied zwischen den beiden Verglasungen wird auf der Tür-Innenseite durch Einbauen oder Weglassen einer Ergänzungsblende ausgeglichen. Bei der Doppelscheibenverglasung, bei der die genannte Blende nicht eingebaut ist, kann in das freistehende U-förmig ausgebildete Ende der Hauptblende ein Füllprofil eingebracht werden.

Nutzfahrzeugtüren weisen - im Gegensatz zum Pkw - im senkrechten Querschnitt nur eine geringe Wölbung (Fallung) auf. Es stellt sich das Problem, daß, aufgrund der geringen Fallung, der Rahmen für die Fensterlagerung trotzdem ausreichend stabil und steif sein muß. Die Steifigkeit wird dadurch erreicht, daß das Außenblech im unteren Fensterbereich stufenförmig (2 Stufen) verpreßt und mit dem versickten Innenblech zu einem Fensterrahmenflansch verbunden ist. Das Maß zwischen Außenkante Türe und Mitte Fensterrahmenflansch soll vom Design her möglichst klein sein, bedarf aber aus Gründen der Steifigkeit eines bestimmten Mindestmaßes. Auf diesen Flansch ist das äußere Führungsprofil für die Glasscheibe gesteckt.

Mit einem weiteren die Führung ergänzenden Profil wird die Einfachverglasung oder bei der Doppelscheibenverglasung, durch den Überstand der Außenscheibe gegenüber der Innenscheibe, die Außenscheibe geführt.

In der Zeichnung ist ein Ausführungsbeispiel der Erfindung schematisch dargestellt.
- Fig. 1: zeigt einen Schnitt bei Doppelverglasung
- Fig. 2: zeigt einen Schnitt bei Einfachverglasung
- Fig. 3: zeigt einen Schnitt der Fensterbrüstung entlang Linie III - III aus Fig. 1 und 2
- Fig. 4: zeigt die Ansicht IV aus Fig. 2.

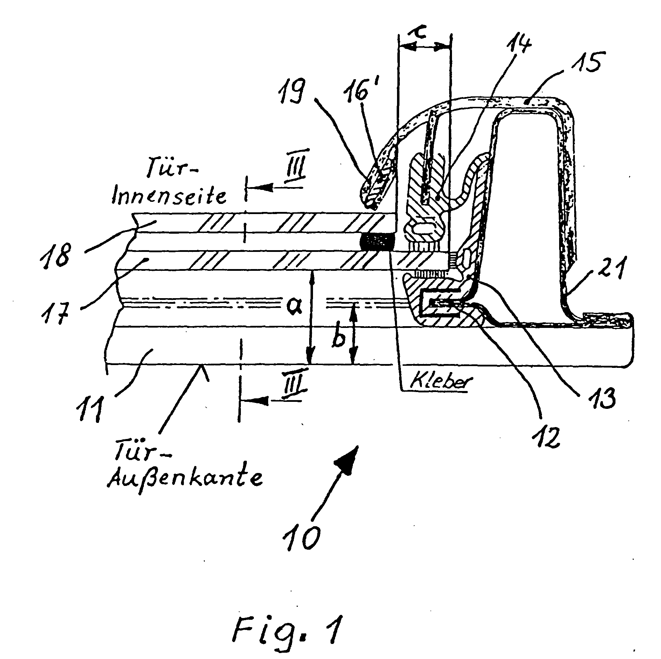

In Fig. 1 ist der erfindungsgemäße Einbau 10 der ausgeführten Doppelscheibenverglasung 17, 18 dargestellt. Das Maß b von Tür-Außenkante bis Mitte Fensterrahmenflansch 12 soll, vom Design aus gesehen, möglichst klein sein, bedarf aber aus Steifigkeitsgründen einer bestimmten Größe. Das Maß a setzt sich aus Maß b und dem anteiligen Maß für das Fensterführungsprofil 13 zusammen und gibt den Rücksprung der Außenkante der äußeren Scheibe 17 zur Außenkante der Tür an. Das Maß c ist der Überstand der Außenscheibe 17 zur Innenscheibe 18 und ist an den beiden Seitenrändern und am oberen Rand der Doppelscheibenverglasung 17, 18 vorhanden. Der Fensterrahmenflansch wird durch das Tür-Außenblech 11 und das Tür-Innenblech 21 gebildet. Die Hauptblende 15 ist am Tür-Innenblech 21 befestigt und trägt ein ergänzendes Führungsprofil 14 für die Verglasungsführung. Das freie Ende 19 der Hauptblende 15 ist U-förmig ausgestaltet und - im Falle der Doppelverglasung 10 - ist ein Füllprofil 16' einbringbar.

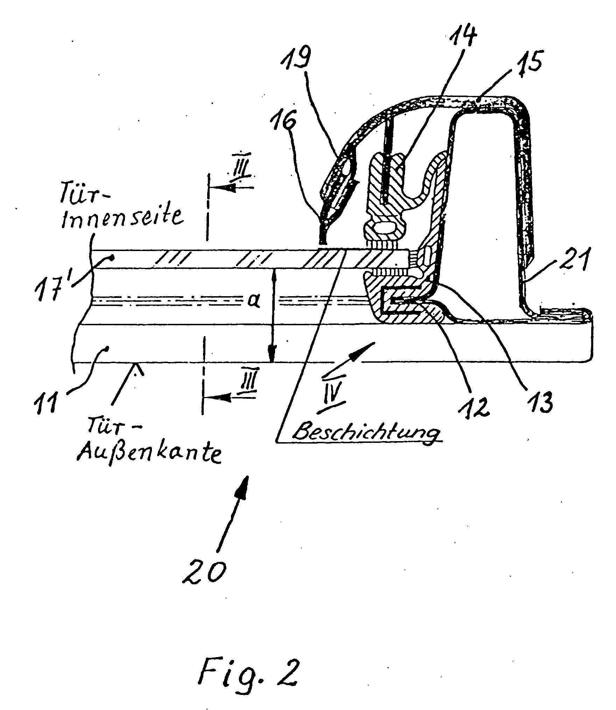

In Fig. 2 ist mit den gleichen Fensterführungsprofilen 13, 14, der gleichen Fahrzeugtür bestehend aus Außen- 11 und Innenblech 21 mit dem gleichen Abstand a der Einbau 20 der Einfachglasscheibe 17' dargestellt. Die Ergänzungsblende 16 ist in das U-förmige Ende 19 der Hauptblende 15 eingebracht und überbrückt die geringere Dicke der Einfachscheibenverglasung 17' gegenüber der Doppelscheibenverglasung 17, 18 nach Fig. 1.

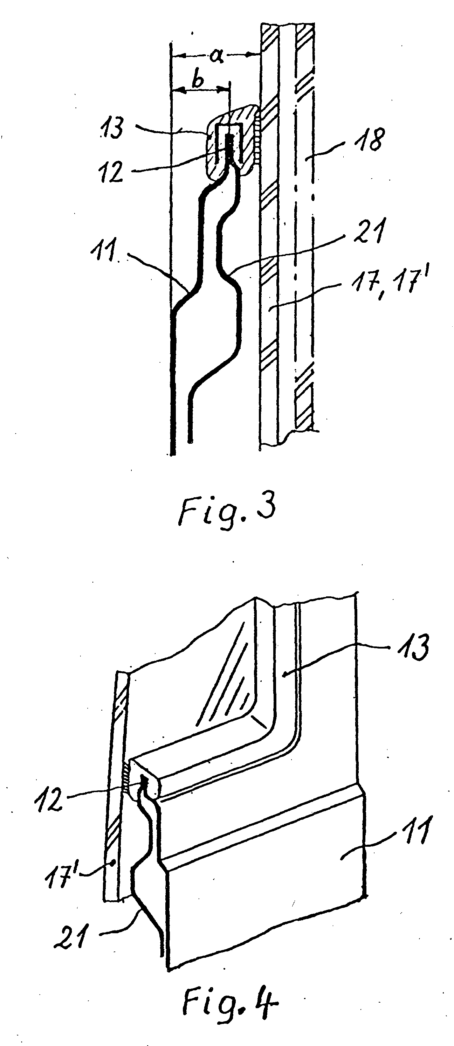

Fig. 3 zeigt den Schnitt der Fensterbrüstung. Maß a ist der Versatz der Verglasungen 17, 18, 17' zur Tür-Außenkante. Das Tür-Außenblech 11 ist stufenförmig gepreßt und bildet mit dem Innenblech 21 den Flansch 12 von dessen Mitte bis zur Außenkante des Außenbleches 11 das für die Steifigkeit der Türe bzw. des Fensterrahmens wichtige Maß b.

Fig. 4 zeigt die perspektivische Ansicht IV aus Fig. 2.

## Patentansprüche

1. Fahrzeugtüre für Lastkraftwagen und Omnibusse mit höhenbewegbarer oder fest eingebauter, im Fensterrand nicht gekröpfter Einscheiben- (20) oder Doppelscheibenverglasung (10), **dadurch gekennzeichnet, daß** die Doppelscheibenverglasung (10) über den überstehenden nicht gekröpften Rand (c) der größeren Außenscheibe (17) gegenüber der Innenscheibe (18) außengeführt bzw. bei nicht bewegbaren Verglasungen außengelagert ist.

2. Fahrzeugtüre nach Anspruch 1, **dadurch gekennzeichnet, daß** für die Doppelscheibenverglasung (10) eine an dem Tür-Innenblech (21) befestigte Hauptblende (15), deren freies Ende (19) bis nahe an die Innenfläche der Doppelscheibenverglasung (10) reicht, und für die Einscheibenverglasung (20) zusätzlich eine in das freie Ende (19) der Hauptblende (15) einsteckbare Ergänzungsblende (16) vorgesehen ist, mit der der Dickenunterschied der Verglasungen (10, 20) ausgleichbar ist.

3. Fahrzeugtüre nach Anspruch 2, **dadurch gekennzeichnet, daß** die Hauptblende (15) an ihrem freistehenden Ende (19) U-förmig ausgestaltet ist.

4. Fahrzeugtüre nach den Ansprüchen 2 und 3, **dadurch gekennzeichnet, daß** in das freistehende Ende (19) der Hauptblende (15), bei Verwendung der Doppelscheibenverglasung (10), ein Füllprofil (16') einbringbar ist.

## Claims

1. Vehicle door for trucks and buses/coaches with a vertically movable or rigidly installed single pane (20) or double pane (10) not dropped in the window margin area, **characterised in that** the double pane (10) is in respect of the inner pane (18) externally guided via the projecting, non-dropped margin area (c) of the larger outer pane (17) or externally supported in the event of non-movable glazing.

2. Vehicle door according to Claim 1, **characterised in that** for the double pane (10) a main cover (15) is provided which is fastened to the door inner metal sheet (21) and whose free end (19) extends to a point close to the inner face of the double pane (10) and for the single pane (20) an additional cover (16) is provided which can be inserted into the free end (19) of the main cover (15) and can compensate for the difference in thickness between the panes (10, 20).

3. Vehicle door according to Claim 2, **characterised in that** the free end (19) of the main cover (15) is U-shaped.

4. Vehicle door according to the Claims 2 and 3, **characterised in that** for the use of a double pane (10) a filler section (16') can be inserted into the free end (19) of the main cover (15).

## Revendications

1. Porte de camion ou d'auto-car comportant un vitrage non recourbé simple (20) ou double (10), mobile ou fixe, installé dans un châssis de fenêtre,
**caractérisée en ce que**
le vitrage double (10) est guidé extérieurement par le dépassement du bord (c) non recourbé de la vitre extérieure (17) par rapport à la vitre intérieure (18) et dans le cas d'un vitrage non mobile, le montage se fait par le vitrage extérieur.

2. Porte de véhicule selon la revendication 1,
**caractérisée en ce que**
pour le vitrage double (10), un habillage principal (15) fixé à la tôle intérieure (21) de la porte, a son extrémité (19) arrivant jusqu'à proximité de la surface intérieure du double vitrage (10), et dans le cas du vitrage simple (20) un habillage complémentaire (16) est engagé dans l'extrémité libre (19) de l'habillage principal (15), pour compenser la différence d'épaisseur des vitrages (10, 20).

3. Porte de véhicule selon la revendication 2,
**caractérisée en ce que**
l'habillage principal (15) a une forme de U au niveau de son extrémité libre (19).

4. Porte de véhicule selon l'une quelconque des revendications 2 et 3,
**caractérisée en ce que**
dans le cas d'un vitrage double (10), l'extrémité libre (19) de l'habillage principal (15) reçoit un profilé de remplissage (16').
